# EUROPEAN PATENT SPECIFICATION

(11) **EP 0 669 097 B1**
(45) Date of publication and mention of the grant of the patent: **04.04.2001**
(21) Application number: 95100876.2
(22) Date of filing: 24.01.1995
(51) Int. Cl.: A47L 15/00, D06F 35/00, D06F 39/00, A47L 15/42

(54) **Washing machine with water recovery arrangement**
Waschmaschine mit Einrichtung zur Wasserrückgewinnung
Machine à laver comportant un dispositif de récupération d'eau

(30) Priority: 25.02.1994 IT PN940011
(43) Date of publication of application: 30.08.1995
(73) Proprietor: Electrolux Zanussi S.p.A., 33170 Pordenone (IT)
(72) Inventor: Centis, Giovanni, I-33074 Fontanafredda, Pordenone (IT)
(74) Representative: Busca, Luciano

(56) References cited:
- EP-A- 0 498 779
- WO-A-95/00694
- DE-A- 3 936 989
- US-A- 2 931 200
- US-A- 5 241 843

## Description

The present invention refers to a washing machine, in particular a dishwashing machine, comprising an arrangement provided to reclaim the water used to carry out at least an operational step or phase of the process.

From such patent specifications as EP-A-0 287 990 and DE-A-2 910 140 clothes washing machines are already known in which the water from at least a rinse phase is collected in an appropriate reservoir, which is connected in parallel thereto, in view of its reuse in the pre-wash or main wash phase of a subsequent process.

US-A-4 810 306 further discloses an industrial-type dishwashing machine in which part of the water used for washing and the whole amount of the water used for rinsing is collected and stored in a reservoir and the so formed mixture is then used for a subsequent washing cycle.

All such provisions and arrangements are effective in bringing about an appreciable energy saving effect, but share the drawback generated by the fact that the rinse and/or wash water stored in the reservoir is at least partially contaminated, ie. polluted. As a consequence, the same reservoir can be subject to heavy settlements or scaling to an unacceptable extent with time, apart from a quite likely formation and build-up of molds, fungi and/or bacteria that may affect the use of the dishwashing machine from a hygienical point of view.

Similar contamination problems are to be faced in a washing machine as disclosed in US-A-5 241 843, in which rinse water from a first cycle is stored in a tank for use in a second cycle. During a rinse phase in the first cycle, fresh water is added to the tank through water inlet valves, and a pump immediately pumps the fresh water out of the tank itself and into a washer tub until a water level switch in the tub determines that a predetermined level has been reached and closes the inlet valves. At the beginning of the rinse phase the fresh water simply flows into the water tub through the tank, which does not become filled with fresh water and therefore is never substantially flushed therewith.

DE-A-39 36 989, which is the basis for the introductory clause of claim 1, discloses a washing machine wherein the water from an operating phase can be stored in a volumetric metering reservoir for re-use during a subsequent cycle. The reservoir, however, forms part not only of a water supply circuit of the machine, but also of a water drain circuit of the machine itself, so the reservoir is contaminated by dirty water at the end of each operating cycle.

It is therefore a purpose of the present invention to generally provide a washing machine equipped with an effective water recovery arrangement which is substantially free of the above cited hygienical and scale-formation problems.

According to the present invention, this aim is reached in a washing machine with a water recovery arrangement provided with the features and the characteristics specified in the independent claim.

Preferred embodiments are subject-matter of the dependent claims.

The characteristics and the advantages of the present invention will become more apparent from the description that is given below by way of non-limiting example with reference to the accompanying drawings in which:
- Figure 1 is a schematical view of a preferred embodiment of the washing machine according to the present invention;
- Figure 2 is a view of an electrical circuit arranged to ensure programmable switching on and off of the main operational parts of the washing machine shown in Figure 1; and
- Figure 3 is a diagram illustrating the operation of the circuit shown in Figure 2.

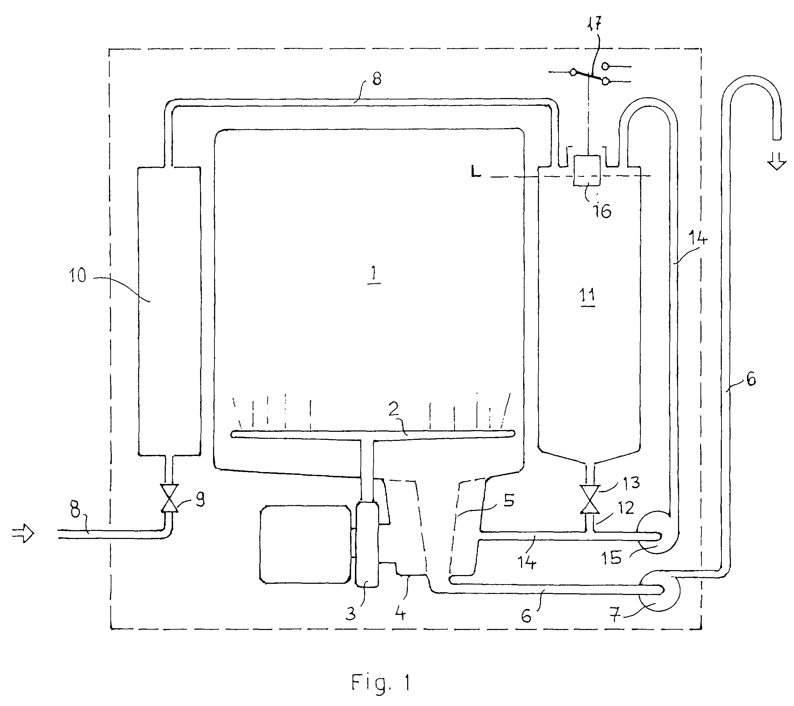

With reference in particular to Figure 1, the washing machine is preferably a dishwashing machine. The latter comprises a washing tank 1 equipped with a collecting sump 4 and accomodating at least a rotating spray arm 2 adapted to be supplied by a circulating pump 3 with water being taken in from said sump 4 through a filter 5. In a traditional manner, the portion of the sump 4 situated upstream of the filter 5 is connected with a pipe 6 associated to a drain pump 7.

From the sump 4, in correspondence of a portion thereof situated downstream of the filter 5, a conduit 14 branches off, said conduit 14 being provided with a recovery pump 15 and flowing into a reservoir 11. Said reservoir 11 is arranged to act as a volumetric metering reservoir and is adapted to receive also fresh mains water through an appropriate supply conduit 8, which is provided with a normally closed electromagnetic water inlet valve 9 and a water softener 10. The bottom of the reservoir 11 communicates with the inside of the tank 1 through a pipe 12 provided with a normally closed electromagnetic or similar valve means 13. In a preferred manner, the pipe 12 connects with the conduit 14 downstream of the electromagnetic valve 13 and upstream of the recovery pump 15.

The metering reservoir 11 is preferably provided with level control means, which may for instance comprise a float 16 adapted to enable the water inlet valve 9 to be opened only when the level of the water in the reservoir 11 is below a pre-determined value L.

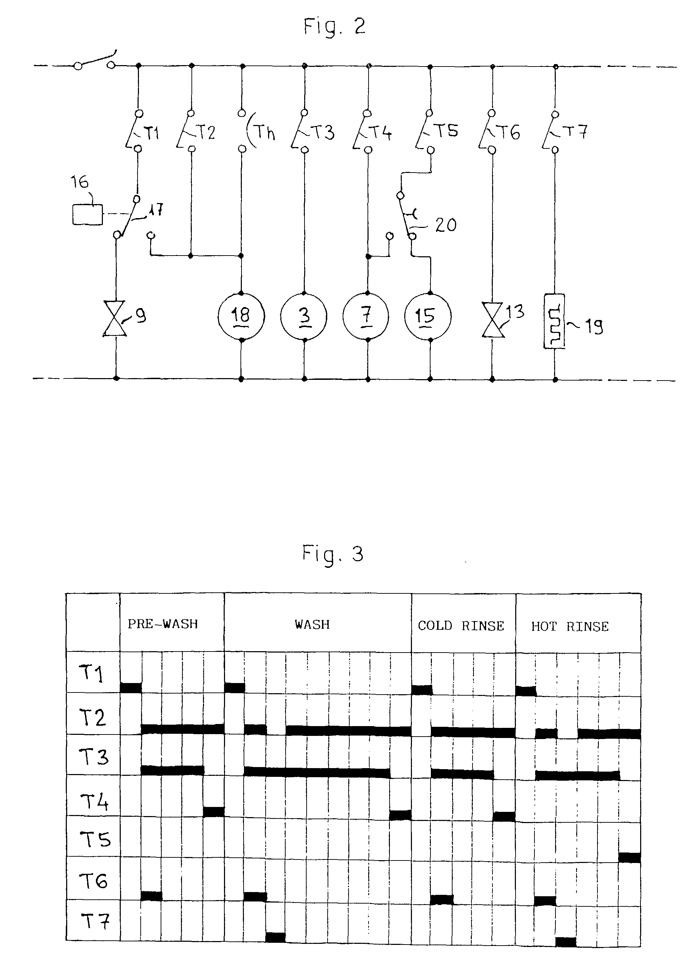

As this is illustrated schematically in Figure 2 by way of example, the float 16 is adapted to actuate a switch (which may also be a commutator) 17 arranged to deliver a power supply to the electromagnetic valve 9 through a further switch T1 that is controlled by the programme control unit of the machine. In a per sè known manner, said programme control unit may comprise a timer 18 adapted to drive a set of cams (not shown) which in turn control a series of electrical switches T1-T7. The switch T2, which is connected in parallel with a thermostatic switch Th, controls the operation of the timer 18, whereas the switches T3-T7 are respectively adapted to control the operation of the circulating pump, 3, the drain pump 7, the recovery pump 15, the valve 13 and a heating element 19 provided to heat up the water collected in the sump 4.

The operation of the circuit shown in Figure 2, as this is illustrated in the diagram shown in Figure 3, is substantially a traditional one, so that it will be not described in detail here. According to the selected programme, each operational cycle of the corresponding process will include at least a washing phase and/or at least a rinsing phase, during which the circulating pump 3 will supply the rotating spray arm 2 with the water that collects in the sump 4.

In any case, each one of said operational phases starts with only the water inlet valve 9 opening, so that the conduit 8 supplies the metering reservoir 11 with fresh mains water until the pre-determined level L is reached. At this point the valve 13 is opened, so that the water volume collected in the metering reservoir 11 is let by gravity into the sump 4 through the pipe 12 and the conduit 14.

Usually, at the end of such operational phases (which are carried out in a quite traditional way, possibly under heating up of the water by the heating element 19) the pump 7 is operated in view of delivering to the drain, through the pipe 6, the water collected in the sump 4.

However, at the end of at least one of such operational phases, preferably at the end of the last rinse phase, the drain pump 7 is not operated, ie. is kept de-energized, whereas the recovery pump 15 is operated instead. The rinse water collected in the sump 4 is therefore delivered, through the conduit 14, to the reservoir 11, where it is then stored in view of its being re-used during the first operational phase of a subsequent washing process. If required, fresh water from the mains can be added the so recovered rinse water until the level L is reached in the reservoir 11. As described in the references cited introductorily, for instance, the rinse water stored in the reservoir 11 may be used in a subsequent washing process as pre-wash or wash water, depending on the programme being selected. It will of course be appreciated that the selection of the phases of both recovery and subsequent re-use of the water may vary according to actual needs and does not in itself fall within the scope of the present invention.

In any case, since the reservoir 11 is a part of the water supply circuit 8-14 (to which it is connected in series), the same reservoir 11 is automatically flushed, and washed, with fresh water from the mains, along with the valve 13 and the conduits 12 and 14, during each water inlet phase taking place after a water recovery phase carried out by operating the pump 15. This practically enables the water from at least one operational phase of a washing process to be recovered in an effective way, while overcoming the hygienical and reliability problems associated with prior-art solutions. In this connection, it should be noticed that the conduit 14 connects with the sump 4 downstream of the filter 5; in an advantageous manner, this enables only filtered water, and therefore water that is substantially free of soil particles, to be recovered and temporarily stored in the reservoir 11.

It will be appreciated that the above described washing machine may undergo a number of modifications without departing from the scope of the present invention, as specified in the claims.

For instance, the pumps 7 and 15 may be replaced by a single pump adapted , in association with appropriate flow diverting means, to selectively deliver the water from the sump 4 to either the drain 6 or the reservoir 11.

As illustrated in Figure 2, furthermore, the washing machine may comprise a preferably manually operated commutator or similar switch 20. When set in a normal resting position (as shown in Figure 2), said commutator switch 20 connects the switch T5 to the drive motor of the recovery pump 15, which is therefore enabled to operate in the afore described manner, as controlled by the programme control unit of the machine.

The commutator switch 20 can be switched over to an operational setting in which it de-energizes the recovery pump 15, while connecting the switch T5 to the drive motor of the drain pump 7 instead. Therefore, the afore described phase, in which the rinse water is stored in the reservoir 11, is hereby changed into a normal water drain phase, in which the pump 7 is operated, thereby preventing contaminated water from being stored in the reservoir 11. This turns out as being particularly advantageous when the dishwashing machine is operated for the last time before an expectedly long non-use period, thereby preventing contaminated water from being stored in the reservoir 11 under conditions which may well become hygienically critical during said prolonged pause.

## Claims

1. Washing machine with water recovery arrangement, comprising a wash tank (1) capable of being supplied with fresh mains water through a normally closed water supply circuit (8) adapted to be opened by programme control means of the machine to perform operating cycles comprising at least a washing phase and/or at least a rinsing phase, said water recovery arrangement being capable of storing in a volumetric metering reservoir the water from at least one of said phases for reuse during a subsequent cycle, said water recovery arrangement comprising a pipe with a pump controlled by said programme control means being adapted to deliver water from the tank into said reservoir, characterized in that the wash tank (1,4) is provided with water filtering means (5), the wash tank being connected with drain means (6) upstream of the filtering means (5), the drain means being separate from said water supply circuit (8-14), said pipe (14) branching off the wash tank in correspondence of a portion thereof located downstream of said filtering means (5), and said reservoir (11) forms a part only of said water supply circuit (8-14) so as to be substantially flushed by the flow of the fresh water delivered into the wash tank (1, 4) each time that said water supply circuit is opened.

2. Washing machine according to claim 1, wherein said water recovery arrangement comprises a pipe with a pump controlled by said programme control means and capable of delivering water from the wash tank into said reservoir, characterized in that, via valve means (13) controlled by the control means (T6), the reservoir (11) is connected with said pipe (14), and therefore with the wash tank (1, 4), upstream of said pump (15).

3. Washing machine according to claim 1, characterized in that said programme control means (T1-T7) comprise switching means (20) adapted to be selectively actuated between a normal resting setting and an operative setting in which the water recovery arrangement (11, 14, 15) is operative and inoperative, respectively.

## Patentansprüche

1. Waschmaschine mit einer Einrichtung zur Wasserrückgewinnung, die umfasst einen Waschtank (1), dem frisches Leitungswasser durch einen normalerweise geschlossenen Wasserzuführkreis (8) zugeführt werden kann, der durch eine Programmsteuerungseinrichtung der Maschine geöffnet werden kann, um Betriebszyklen auszuführen, die zumindest eine Waschphase und/oder zumindest eine Spülphase umfassen, wobei die Einrichtung zur Wasserrückgewinnung in einem Volumenmessbehälter das Wasser von zumindest einer der Phasen zur Wiederverwendung während eines nachfolgenden Zyklus speichern kann, wobei die Einrichtung zur Wasserrückgewinnung ein Rohr mit einer durch die Programmsteuerungseinrichtung gesteuerten Pumpe umfasst, die Wasser von dem Tank in den Behälter liefern kann, **dadurch gekennzeichnet,** dass der Waschtank (1,4) mit Wasserfiltermitteln (5) versehen ist, der Waschtank mit Ablaufmitteln (6) stromaufwärts der Filtermittel (5) verbunden ist, die Ablaufmittel von dem Wasserzuführkreis (8-14) getrennt sind, das Rohr (14) von dem Waschtank entsprechend einem Abschnitt davon abzweigt, der sich stromabwärts der Filtermittel (5) befindet, und der Behälter (11) nur einen Teil des Wasserzuführkreises (8-14) bildet, so dass er im Wesentlichen durch die Strömung des frischen Wassers, das in den Waschtank (1, 4) geliefert wird, jedesmal gespült wird, wenn der Wasserzuführkreis geöffnet ist.

2. Waschmaschine gemäß Anspruch 1, bei der die Einrichtung zur Wasserrückgewinnung ein Rohr mit einer Pumpe umfasst, die durch die Programmsteuerungseinrichtung gesteuert wird, und Wasser von dem Waschtank in den Behälter liefern kann, **dadurch gekennzeichnet,** dass der Behälter (11) über Ventilmittel (13), die von der Steuerungseinnchtung (T6) gesteuert werden, mit dem Rohr (14) und deshalb mit dem Waschtank (1, 4) stromaufwärts der Pumpe (15) verbunden ist.

3. Waschmaschine nach Anspruch 1, **dadurch gekennzeichnet,** dass die Programmsteuerungseinrichtung (T1-T7) Schaltermittel (20) umfasst, die selektiv zwischen einer normalen Ruhestellung und einer Betriebsstellung betätigt werden können, in der die Einrichtungen (11, 14, 15) zur Wasserrückgewinnung in bzw. außer Betrieb ist.

## Revendications

1. Machine à laver à dispositif de récupération d'eau, comprenant une cuve de lavage (1) apte à être alimentée en eau douce des canalisations par un circuit d'alimentation en eau (8) normalement fermé, adapté pour être ouvert par des moyens de commande programmés de la machine pour exécuter des cycles de fonctionnement comprenant au moins une phase de lavage et/ou au moins une phase de rinçage, ledit dispositif de récupération d'eau étant apte à stocker dans un réservoir de mesure volumétrique l'eau provenant d'au moins l'une desdites phases pour une réutilisation pendant un cycle suivant, ledit dispositif de récupération d'eau comprenant un tuyau avec une pompe commandée par lesdits moyens de commande programmés étant adapté pour délivrer de l'eau de la cuve jusque dans ledit réservoir, caractérisée en ce que la cuve de lavage (1, 4) est pourvue de moyens de filtrage d'eau (5), la cuve de lavage étant connectée à des moyens de vidange (6) en amont des moyens de filtrage (5), les moyens de vidange étant séparés dudit circuit d'alimentation en eau (8 - 14), ledit tuyau (14) raccordant la cuve de lavage en correspondance avec une partie de celle-ci située en aval desdits moyens de filtrage (5), et ledit réservoir (11) forme seulement une partie dudit circuit d'alimentation en eau (8 - 14) de manière à ce qu'il soit sensiblement nettoyé à grande eau par le courant de l'eau douce délivrée dans la cuve de lavage (1, 4) chaque fois que ledit circuit d'alimentation en eau est ouvert.

2. Machine à laver selon la revendication 1, dans laquelle ledit dispositif de récupération d'eau comprend un tuyau avec une pompe commandée par lesdits moyens de commande programmés et apte à délivrer de l'eau de la cuve de lavage jusque dans ledit réservoir,
caractérisée en ce que, par des moyens à soupape (13) commandés par les moyens de commande (T6), le réservoir (11) est connecté audit tuyau (14), et par conséquent à la cuve de lavage (1, 4), en amont de ladite pompe (15).

3. Machine à laver selon la revendication 1, caractérisée en ce que lesdits moyens de commande programmés (T1-T7) comprennent des moyens de commutation (20) adaptés pour être actionnés sélectivement entre un positionnement normal de repos et un positionnement de fonctionnement dans lesquels le dispositif de récupération d'eau (11, 14, 15) est actif et inactif, respectivement.
